# EUROPEAN PATENT SPECIFICATION

(11) **EP 3 179 603 B1**
(45) Date of publication and mention of the grant of the patent: **23.09.2020**
(21) Application number: 14899239.9
(22) Date of filing: 08.08.2014
(51) Int. Cl.: H02K 1/16, H02K 17/16, H02K 15/06

(54) **ALTERNATING-CURRENT MOTOR**
WECHSELSTROMMOTOR
MOTEUR À COURANT ALTERNATIF

(43) Date of publication of application: 14.06.2017
(73) Proprietor: Mitsubishi Electric Corporation, Chiyoda-ku Tokyo 100-8310 (JP)
(72) Inventor: TERASAWA, Hideo, Tokyo 100-8310 (JP); NAKAGAWA, Kenichi, Tokyo 100-8310 (JP)
(74) Representative: Witte, Weller & Partner Patentanwälte mbB
(86) International application number: PCT/JP2014/071097
(87) International publication number: WO 2016/021070

(56) References cited:
- EP-A1- 0 740 403
- JP-A- S5 321 703
- JP-A- S5 788 843
- JP-A- 2007 512 797
- JP-A- 2011 087 373
- JP-A- 2014 135 786
- JP-A- 2014 135 786
- US-A1- 2005 110 361

## Description

### Technical Field

The present disclosure relates to an AC motor.

### Background Art

An induction motor is one type of AC motors. A rotating magnetic field is generated by an alternating current flowing in a stator coil in a slot in an induction motor. An induced electromotive force is generated in a rotor conductor by an interlinkage of the rotor conductor in the rotor slot with the rotating magnetic field. An induced current flows in the rotor conductor making a closed circuit due to the induced electromotive force, and magnetic poles are generated in a rotor core. A circumferential direction force is generated in a rotor due to an interaction between the rotor core magnetic poles and magnetic poles of the rotating magnetic field. This force generates an output torque of the rotation shaft of the induction motor.

In an AC motor represented by an induction motor, there is a need for increasing an output without increasing the size of the motor. Increasing an electric current flowing in a stator coil for generating a rotating magnetic field is required. However, in order to decrease the influence on the size of the motor, most effective use of the space occupied by the stator coil in the slot in the stator iron core is required. A formed coil is used for the purpose of utilizing the space effectively as much as possible. A rectangular cross-sectional shaped conductor having a large cross sectional area is used for the formed coil and is formed so that the whole conductor arranged along the coil side maintains the rectangle shape after having been wound up a necessary number of times.

Furthermore, in order to increase magnetic fluxes to be generated, application of a double-layer winding system capable of increasing the number of coils is required. In the stator coil, each coil side is inserted into two slots spaced from each other at a predetermined distance. In the case of the double-layer winding system, one coil side is arranged on the interior side of the slot, and the other coil side is arranged on the entry side of another slot. Coil sides of two different stator coils are inserted in each slot of the stator iron core.

Slots of a conventional AC motor (an induction motor) used for driving railroad carriages are referred to as open slots, for example, refer to FIG. 1 of of Unexamined Japanese Patent Application Kokai Publication No. 2011-87373.

Document EP 0 740 403 A1 shows coil pieces which have been shaped in advance into coils are individually inserted into the slots of a stator core. Several of the coil pieces which are inserted last are inserted into the outer circumference layer of the slots by first lifting coil pieces which have already been inserted into the inner circumference layer of those slots. During this process, each of the flat type conducting wires of the sides of the coil pieces remaining inside slots rotates, reducing the deformation of the coil piece. Document US 2005/0110361 A1 shows a dynamoelectric machine stator core for receiving a pre-formed stator winding including a core body defining a cylindrical core main peripheral surface. A plurality of axially extending stator slots are circumferentially spaced in the core body. Each of the stator slots defines a slot first section extending radially from the slot base to a slot intermediate radial position and a slot second section extending radially from the slot intermediate radial position towards the core main peripheral surface. The slot first and second sections communicate with each other and are circumferentially offset relative to each other.

The width of the slot in which the stator coil is inserted is uniform from the entry portion to the bottom portion. The formed coil formed with a rectangular cross sectional shaped conductor can be inserted in a slot from the slot entry portion, a ratio of the cross sectional area of the stator coil occupied in the slot can be increased, and the coils can easily be connected on the external side of the stator iron core.

### Citation List

### Patent Literature

Patent Literature 1:

### Summary of Invention

### Technical Problem

When assembling a stator, a process of inserting a stator coil in a slot is to be repeated sequentially. Therefore, at the final stage of this process, a different coil side of the stator coil is required to be inserted on the interior side of the coil side of the stator coil already inserted in the slot (portion on the entry side). In this case, this operation is performed after lifting up and once removing the coil side already disposed from the slot.

This operation causes an issue of prolonging time required for assembling a stator. Particularly, when the inside diameter of the stator iron core is small, the lifting work of the coil side is not easy, and the time required for assembling the stator considerably increases. Furthermore, when the coil side disposed on the entry side of the slot is lifted up, an insulation film covering the outside of the stator coil might get damaged by the coil side disposed on the interior side of the slot being strongly pressed against the interior wall of the slot and the corner portion of the stator iron core.

The present disclosure is developed in view of the above-mentioned circumstances, and an objective of the present disclosure is to provide an AC motor that enables easy coil assembly and reduces the likelihood of damage to the insulation film on the coil surface.

### Solution to Problem

In order to achieve the aforementioned objective, in a plurality of slots disposed in the stator iron core of the AC motor of the present disclosure, spaces are provided in which one coil side can be rotated on the interior side of the slot, when the other coil side is lifted up from another slot.

### Advantageous Effects of Invention

According to the present disclosure, as a space is provided in which one coil side can be rotated on the interior side of the slot for when the other coil side is lifted up from another slot, the other coil side can be lifted up from another slot without problems. As the result, coils can be easily assembled thereby reducing the possibility of damaging the insulation film on the coil surface.

### Brief Description of Drawings

FIG. 1 is a longitudinal cross-sectional view of an AC motor according to Embodiment 1 of the present disclosure;
FIG. 2 is a cross sectional view of A-A' of FIG. 1;
FIG. 3 is a diagram illustrating a state in which a stator coil is inserted in a slot;
FIG. 4 is an enlarged view of a stator slot;
FIG. 5 is a diagram illustrating a state in which when a coil side of the stator coil is lifted up and a coil side of the other stator coil is inserted in the slot;
FIG. 6 is a cross sectional view of a stator slot of a conventional AC motor;
FIG. 7 is a diagram illustrating a state in which when a coil side of a stator coil is to be lifted up and then a coil side of the other stator coil is to be inserted in a slot in a conventional AC motor;
FIG. 8 is a cross sectional view of a stator slot of an AC motor of Embodiment 2 of the present disclosure.
FIG. 9 is an enlarged view of the slot of the stator of FIG. 8;
FIG. 10 is a cross sectional view of a stator slot of an AC motor of Embodiment 3 of the present disclosure;
FIG. 11 is an enlarged view of the slot of the stator of FIG. 10;
FIG. 12 is a cross sectional view of a stator slot of an AC motor of Embodiment 4 of the present disclosure;
FIG. 13 is an enlarged view of the slot of the stator of FIG. 12;
FIG. 14 is a cross sectional view of a stator slot of an AC motor of Embodiment 5 of the present disclosure;
FIG. 15 is an enlarged view of the slot of the stator of FIG. 14;
FIG. 16 is a cross sectional view of a stator slot of an AC motor of Embodiment 6 of the present disclosure; and
FIG. 17 is an enlarged view of the slot of the stator of FIG. 16.

### Description of Embodiments

Hereinafter, embodiments of the present disclosure are described in detail with reference to the drawings.

### Embodiment 1

Next, Embodiment 1 of the present disclosure is described.

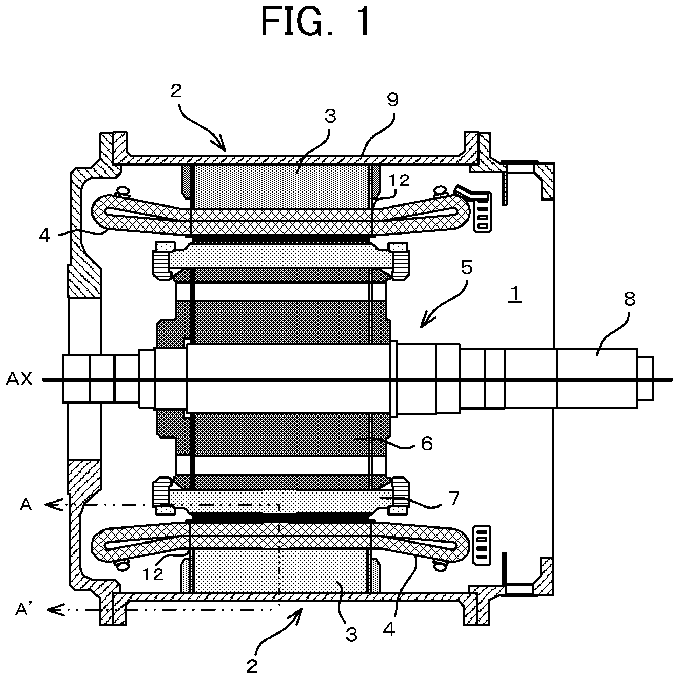

FIG. 1 illustrates a longitudinal cross-sectional view of an AC motor according to Embodiment 1 of the present disclosure. The longitudinal cross section is a section when an AC motor 1 is cut along a center axis of the rotation shaft AX of the AC motor 1. This AC motor 1 is an induction motor.

As illustrated in FIG. 1, the AC motor 1 includes a stator 2 producing a rotating magnetic field and a rotor 5 rotating around the center axis AX positioned at the center. The stator 2 and the rotor 5 are disposed in a frame 9.

The stator 2 is fixed to the frame 9 of the AC motor 1, and is arranged to surround the rotor 5 around the center axis of the rotation shaft AX positioned at the center.

The stator 2 includes a stator iron core 3 and a plurality of stator coils 4. The stator iron core 3 is a laminated iron core, and the stator iron core 3 is also called a stator core.

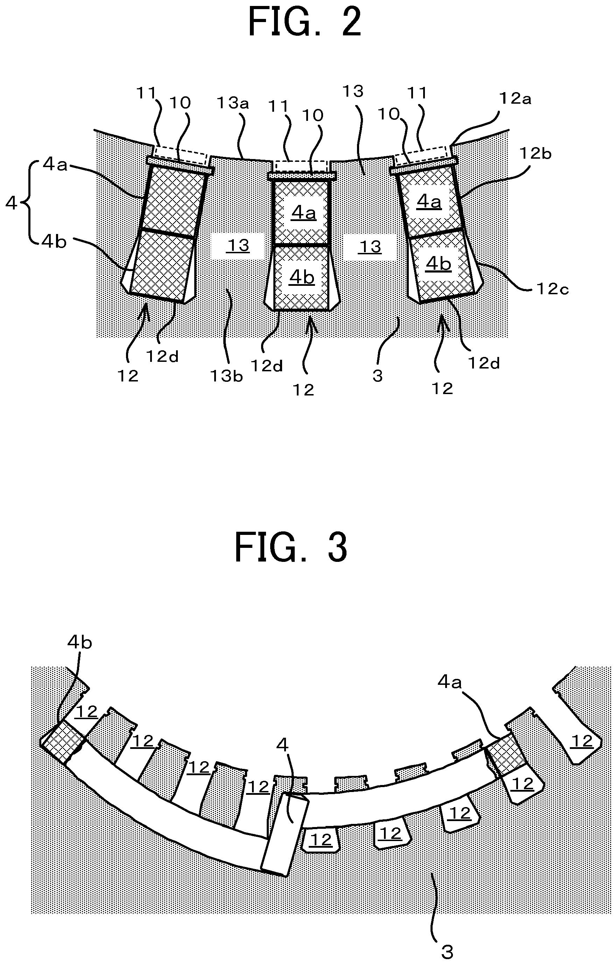

FIG. 2 illustrates a cross sectional view of A-A' of the stator 2 of the AC motor 1 illustrated in FIG. 1. As illustrated in FIG. 2, in the stator iron core 3, a plurality of slots 12 are arranged at equal distances on the inner circumferential side of the stator iron core 3. The stator coils 4 are inserted in the slots 12. A rotating magnetic field is generated in the stator 2 by an alternating current flowing in the stator coils 4.

The rotor 5 is arranged on the inside of the stator 2 via a bearing and is rotatable around the center axis AX positioned at the center.

The rotor 5 includes a rotor shaft 8 rotating around the center axis AX positioned at the center, a cylindrical rotor core 6 disposed around the rotor shaft 8, and a rotor conductor 7 inserted in the slots of the rotor core 6. When an AC power is input into the stator coils 4, a rotating magnetic field is generated in the stator iron core 3. An electric current is induced by the rotating magnetic field in the rotor conductor 7. An interaction between magnetic poles generated in the rotor core 6 by the induced current and magnetic poles of the rotating magnetic field generates torque in the rotor core 6 to rotate the rotor shaft 8.

A configuration of the stator 2 is further described in detail. As illustrated in FIG. 2, the stator coils 4 are formed in such a manner that a conductor having a rectangular cross sectional shape coated with insulation material is wound up the necessary number of times into coil shapes, and the outside of the insulation coated conductor is covered with an insulating tape and the like so that the whole conductor arranged around the coil side maintains a rectangle shape.

As illustrated in FIG. 3, the stator coil 4 is inserted into the plurality of slots 12 disposed in the stator iron core 3, the stator coil 4 extending over the slots 12. One coil side of the stator coil 4 is inserted on the interior side of one slot 12 of the plurality of slots 12 and is referred to as a lower coil 4b. The other coil side of the stator coil 4 is inserted on the entry side of another slot 12 of the plurality of slots 12 that are spaced apart from each other at a predetermined distance and the other coil side is referred to as an upper coil 4a. In other words, in the AC motor 1, the stator coils 4 are inserted in the slots 12 using the double-layer winding system.

The widths of the slots 12 are set to be values in which gaps ranging between 0.3 to 0.5 mm are added to a maximum width of the coil sides (the upper coil 4a, the lower coil 4b) that hold the plurality of insulation coated conductors in rectangular shapes using insulating tapes and the like. This makes an insertion of the stator coil 4 into the slot 12 easy, and reduces possibility of damaging the surface insulating layer of the stator coil 4 at the time of the insertion.

As illustrated in FIG. 2, in the slots 12, the two coil sides (the upper coil 4a, the lower coil 4b) of two stator coils 4 are arranged in the depth direction of the slots 12. Wedges 10 to prevent the stator coils 4 from falling off are arranged in entry portions 12a of each slot 12. Furthermore, recesses 11 for forming passages are provided through which cool air flows when the AC motor 1 is in operation.

In each of the slots 12, spaces are provided in which, when the coil side on the upper coil 4a side of the stator coil 4 is lifted up from a slot 12, the coil side on the lower coil 4b side can rotate on the interior side of the slot 12.

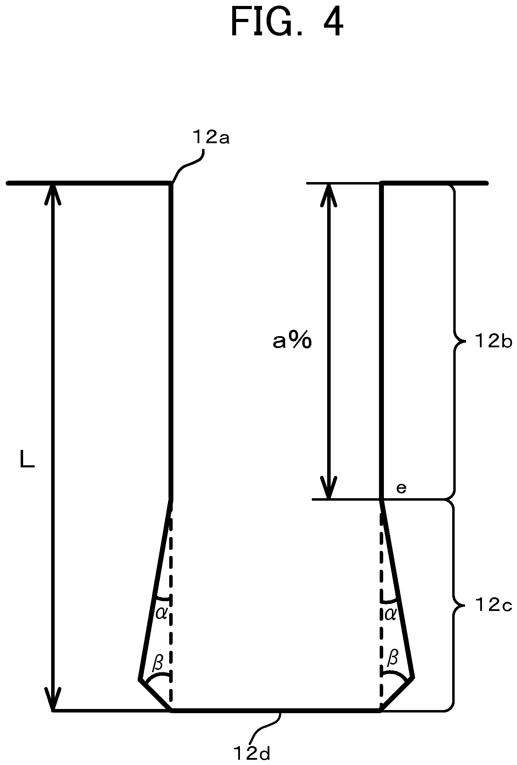

FIG. 4 illustrates an enlarged view of the slot 12. As shown in FIG. 4, the slot 12 is provided therein with, the entry portions 12a that is an open portion, a parallel groove portion 12b in which facing inner walls having the same width are parallel, a groove bottom portion 12d that is the bottom surface of the slot 12, and a wide portion 12c in which the width of the slot 12 is increased.

In the slot 12, the depth of the parallel groove portion 12b is equal to a% of a groove depth L that is a groove depth from the entry portion 12a to the groove bottom portion 12d. Hereinafter, the a% depth position is also referred to as a depth position e. The above-mentioned a% is approximately 60% and can be, for example, a numerical value between not less than 50% and not more than 70%.

The wide portion 12c is a portion from the depth position e (a% depth) to the groove bottom portion 12d. In the wide portion 12c, the groove width increases from the a% depth position towards the groove bottom portion 12d at an opening angle of α degree on both sides respectively. For example, α is 10 degrees.

In addition, in the wide portion 12c, the groove width increases from the groove bottom portion 12d towards the entry portions 12a on both sides at an opening angle of β degree on both sides respectively. For example, β is 45 degrees.

In this way, each of the slots 12 of Embodiment 1 features a space in which the slot width increases at an α degree (a first angle) from a predetermined depth position e towards the groove bottom portion 12d. The predetermined depth position e is a depth position of approximately 60% of the overall depth L, and α is 10 degrees.

In addition, in each of the slots 12, a space is formed by increasing the width of the slot at β degree (a second angle) towards the entry side from the groove bottom portion 12d. β is 45 degrees.

The overall cross-sectional shape of the slot 12 is octagonal.

Next, an integration of the stator coils 4 into the stator 2 of the AC motor 1 is described.

One stator coil 4 is inserted into two slots 12 extending over the two slots 12. For example, in one AC motor 1 having 36 slots 12, a total of 36 stator coils 4 are inserted in the slots 12. For most of the stator coils 4, each coil side (the upper coil 4a, and the lower coil 4b) can be inserted into two places of slots 12 at a predetermined distance without any problem. However, when one coil side of the last several stator coils 4 is inserted on the interior side of the slots 12 as the lower coil 4b, the coil side of the different inserted stator coil 4 exists on the entry side of the slot 12 as the upper coil 4a. Therefore, a coil side is required to be inserted as a lower coil 4b in a state in which the upper coil 4a is lifted up from the slot 12.

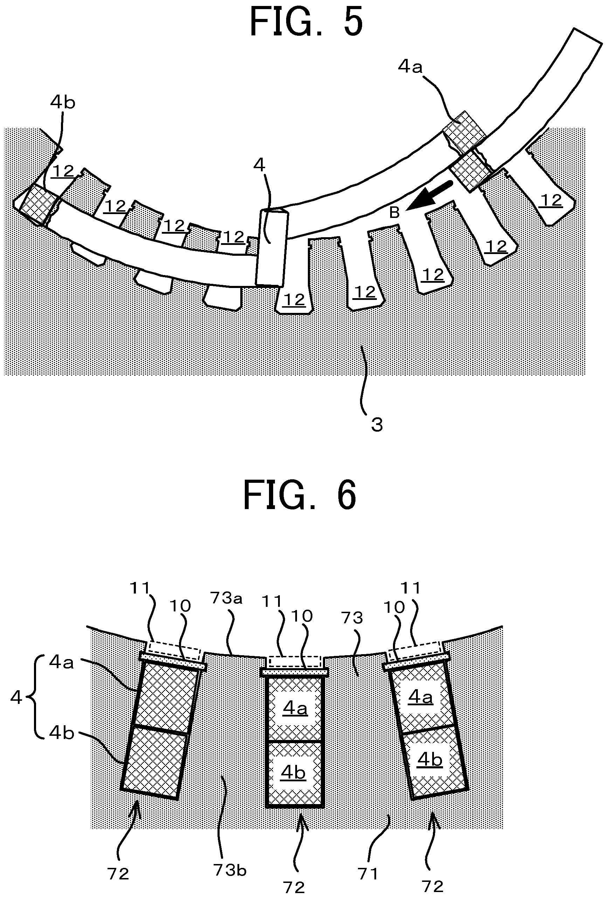

In the slots 12, the groove widths are increased from the groove depth position a% (approximately 60) towards the groove bottom portion 12d at an opening angle of α degree (10 degrees) on both sides respectively. Therefore, the lower coil 4b of the stator coil 4 inserted in the slots 12 can be inclined up to the angle of α degree (10 degrees) on the interior side of the slot 12. Therefore, as illustrated in FIG. 5, the upper coil 4a can be easily lifted up to the outside of the slot 12. In this way the insertion into the slots 12 can be easily performed by lifting up to the outside of the slot 12 an upper coil 4a of a different stator coil 4 that has already been inserted and by moving the lower coil 4b of another stator coil 4 in the arrow B direction. In addition, as the lower coil 4b can be freely inclined to the inclination of the tapered inner wall of the wide portion 12c of the slots 12, the lower coil 4b is never strongly pressed against the groove wall of the slots 12, and thus damage to the insulating layer on the surface of the stator coils 4 can be prevented.

In the slots 12, the parallel groove portion 12b is from the entry portion 12a to the depth position e the depth of which is a% (approximately 60%) of the groove depth L. Therefore, in a state in which all the stator coils 4 are inserted at the predetermined positions, the groove widths on the interior side of the slots 12 are increased. However, the upper portion of the lower coil 4b is retained by the parallel groove portion 12b. The predetermined depth position e is determined in such a way that the upper portion of the lower coil 4b is within the parallel groove portion12b, and furthermore the lower coil 4b is rotatable in the space on the interior side of the slot.

Furthermore, as illustrated in FIG. 2, the opening angle of α degree (10 degrees) that increases the groove width from depth position e (a% depth) (approximately 60%) on both sides is determined in such a way that a width of a dedendum portion 13b of stator core teeth 13 between the slots 12 is wider than a width of a tooth top portion 13a. This makes a magnetic flux density of the dedendum portion 13b smaller than the magnetic flux of the tooth top portion 13a when magnetic fluxes generated by the stator coils 4 pass through the dedendum portion 13b, and can maintain a power factor for the AC motor 1 almost equal to power factors of conventional slot shaped AC motors,.

Even if the number of slots 12 that are disposed in the stator iron core 3 is other than 36, as long as the opening angle α for increasing the groove width from the a% (approximately 60%) depth position e in the slots 12 is set according to the number of the slots 12, the cross sectional shape of the slot 12 can be set such that the tooth widths of the dedendum portions 13b of the stator core teeth 13 between the slots 12 are wider than the tooth widths of the tooth top portions 13a.

In a stator core 71 of a conventional AC motor, as illustrated in FIG. 6, a slot 72 disposed from a tooth top portion 73a over to a dedendum portion 73b between stator core teeth 73 is generally a parallel groove. Upper coils 4a and lower coils 4b of the stator coils 4 are inserted in predetermined gaps provided on the interior side of the slots 72 that are parallel grooves. In a final stage in which a stator coil 4 is inserted in the slot 72, when one tries to insert the lower coil 4b, as the upper coil 4a of an already inserted different stator coil 4 exists in the slot 72, one would have to lift up the inserted upper coil 4a when one tries to insert a lower coil 4b of another stator coil 4.

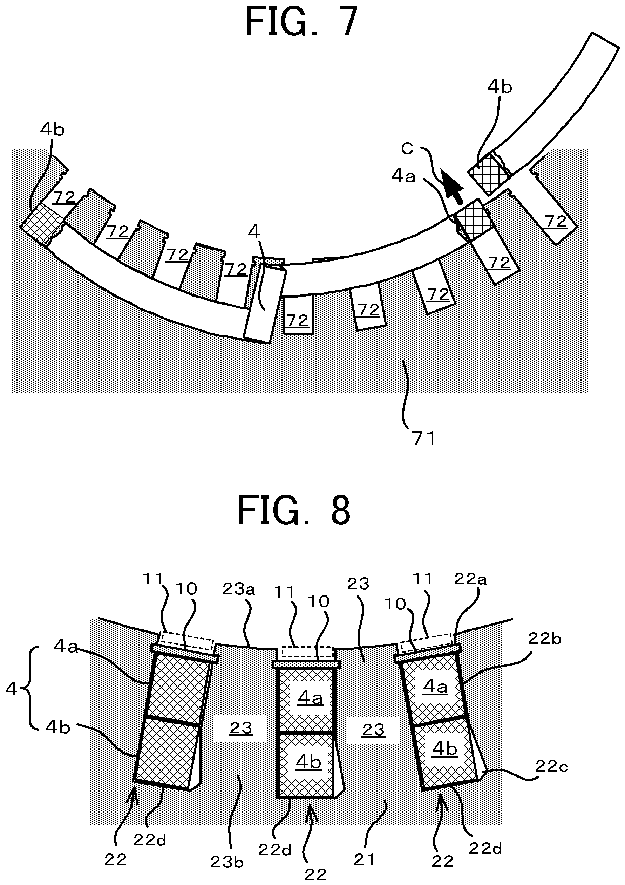

However, the inclinations of the lower coils 4b of the stator coils 4 are small in the grooves when the slots 72 are parallel grooves. Thus, as illustrated in FIG. 7, the inserted upper coil 4a cannot be easily moved to the outside of the slot 72. For this reason, the lower coil 4b of another stator coil 4 on the interior side of the slot 72 is required to be inserted while the upper coil 4a of the inserted stator coil 4 is lifted up in a direction of an arrow C. The lifting of this upper coil 4a requires a large force because a space where the lower coil 4b can rotate is not formed, and the formed stator coil 4 undergoes a change in shape to some extent. At a stage in which the last stator coil 4 is inserted, several upper coils 4a are to be lifted up. As the result, considerable time is required for the insertion work of the coils, and the lower coils 4b corresponding to the lifted up upper coils 4a are strongly pressed against the groove walls and the like in the slots 72, and the insulation layers on the surface of the stator coils 4 are possibly damaged.

In contrast, according to the AC motor 1 according to this Embodiment, the slot 12 includes: (i) the parallel groove portion 12b extending from the entry portion 12a of the slot 12 to the a% (approximately 60%) depth position e that is a% of the groove depth L which is between the entry portion 12a and the groove bottom portion 12d; (ii) the portion from a% (approximately 60%) depth position e towards the groove bottom portion 12d, the groove width of the portion being increased at the opening angle of α degree respectively (10 degrees respectively) in the groove width direction on both sides; and (iii) the portion from the groove bottom portion 12d towards the entry portion 12a, the groove width of the portion being increased at the opening angle of β degree respectively(45 degrees respectively). The shapes of the slots 12 make the work of lifting the upper coils 4a up easy, and enable the time required for integrating the stator coils 4 to be shortened even in the case of the AC motor 1 where the inside diameter of the stator iron core 3 is small.

Furthermore, when the upper coil 4a is lifted up, the lower coil 4b can be inclined until the lower coil 4b abuts the tapered inner wall of the slot 12. Therefore, the lower coil 4b is never strongly pressed against the wall surface of the slot 12 and a corner portion of an end portion of the stator iron core 3, and the possibility of damaging the insulation layer on the surface of the stator coil 4 can be reduced.

### Embodiment 2

Next, Embodiment 2 of the present disclosure is described.

A cross sectional shape of a slot 22 is different from the cross sectional shape of the slot 12. This is only the difference between the configuration of an AC motor 1 according to Embodiment 2 and the above-mentioned configuration of the AC motor 1 according to Embodiment 1.

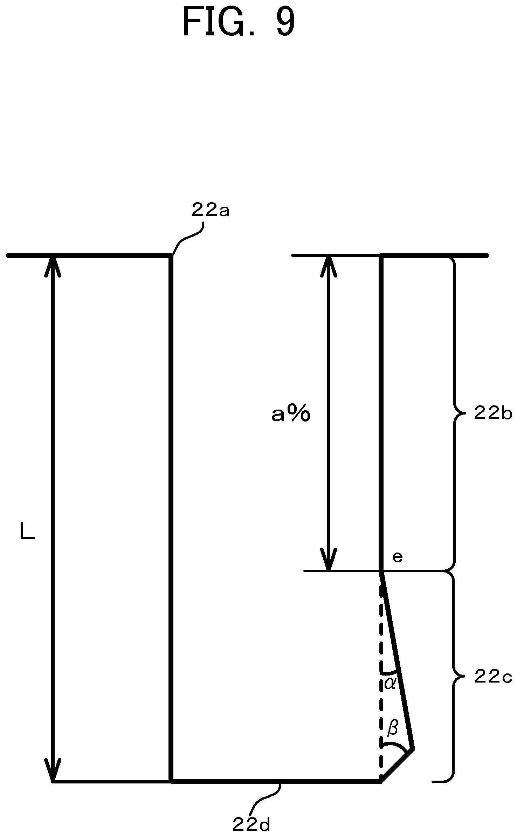

According to Embodiment 2, as illustrated in FIG. 8 and FIG. 9, in a wide portion 22c that extends from the approximately 60% depth position e to a groove bottom portion 22d, the groove width is increased from the depth position e towards the groove bottom portion 22d at an opening angle of α degree (10 degrees) on one side in a groove width direction. Furthermore, the wide portion 22c has a portion in which the groove width is increased from the groove bottom 22d towards an entry side at an opening angle of β degree (45 degrees) on one side in the same direction. In this way, direction of the insertion of the stator coils 4 into the slots 22 is limited to one direction. However, effects equivalent to those of Embodiment 1 mentioned above can be expected.

In Embodiment 2, the groove width of the slot 22 is increased only on one side. In this way, while a tooth width of a dedendum portion 23b of a stator core tooth 23 can be kept larger than a tooth top portion 23a, the opening angle α that increases the width of the slot can be increased to 20 degrees. In this way, in the final stage of the insertion of the stator coils 4, effects that can make the lifting work of the upper coil portion 4a of the inserted coil easier can be expected.

### Embodiment 3

Then, Embodiment 3 of the present disclosure is described.

A cross sectional shape of a slot 32 is different from the cross sectional shape of the slot 12. This is only the difference between the configuration of an AC motor 1 according to Embodiment 3 and the above-mentioned configuration of the AC motor 1 according to Embodiment 1.

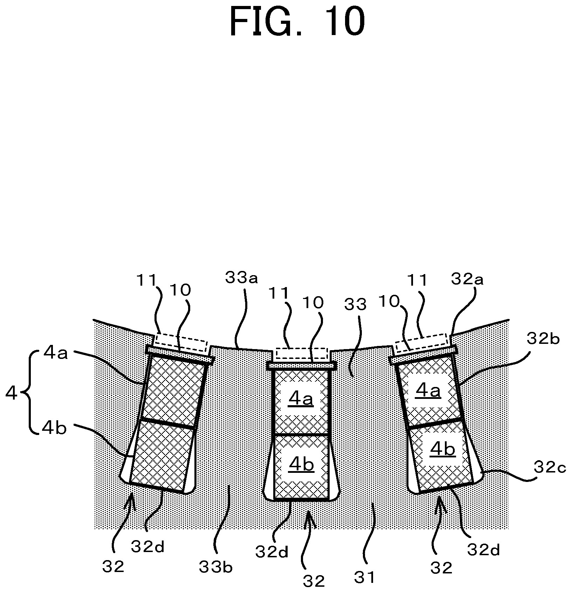

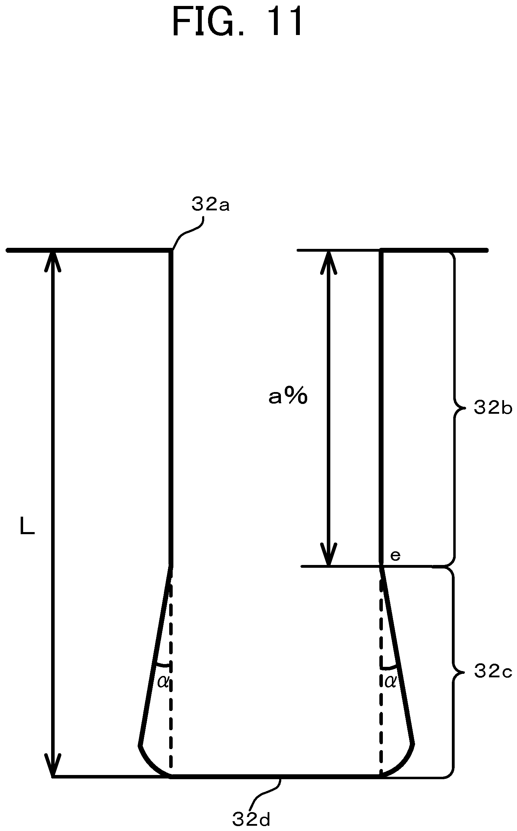

According to Embodiment 3, as illustrated in FIG. 10 and FIG. 11, in a wide portion 32c that extends from the approximately 60% depth position e to a groove bottom portion 32d, the slot width is increased from the 60% depth position e towards the groove bottom portion 32d at the opening angle of α degree (10 degrees) on both sides in the groove width direction. Furthermore, regarding the groove bottom side surface of the wide portion 32c, surfaces extending from the groove bottom portion 32d in the groove width direction on both sides are concave surfaces.

Effects equivalent to those of Embodiment 1 mentioned above can be expected even if the cross sectional shape of the slot 32 is in such a shape.

### Embodiment 4

Next, Embodiment 4 of the present disclosure is described.

A cross sectional shape of a slot 42 is different from the cross sectional shape of the slot 32. This is only the difference between the configuration of an AC motor 1 according to Embodiment 4 and the above-mentioned configuration of the AC motor 1 according to Embodiment 3.

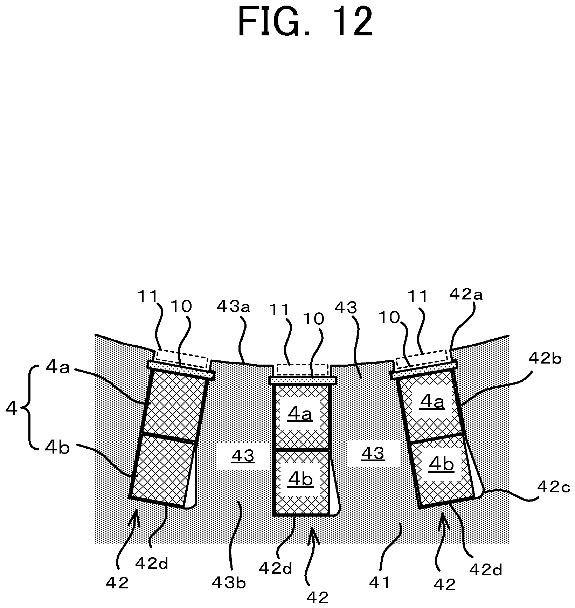

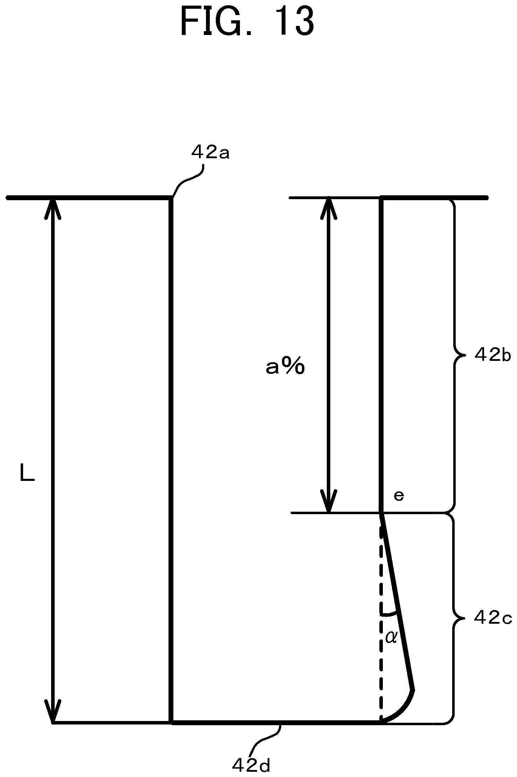

According to Embodiment 4, as illustrated in FIG. 12 and FIG. 13, in a wide portion 42c that extends from the approximately 60% depth position e to a groove bottom portion 42d, the groove width is increased from the 60% depth position e towards the groove bottom portion 42d at the opening angle of α degree (10 degrees) on one side in the groove width direction. Furthermore, regarding the groove bottom side surface of the wide portion 42c, the surface extending from the groove bottom portion 42d in the groove width direction on the same side is a concave surface. In this way, directions of inserting the stator coils 4 into the slots 42 are limited to one direction. However, effects equivalent to those of Embodiment 3 mentioned above can be expected.

Furthermore, the slot width of the slot 42 is increased only on one side. As aforementioned, while a tooth width of a dedendum portion 43b of a stator core tooth 43 can be kept larger than a tooth top portion 43a, the opening angle α that increases the groove width of the slot can be increased to 20 degrees, and in the final stage of the insertion of the stator coils 4, the lifting work of the inserted upper coil portion 4a can be performed more easily.

### Embodiment 5

Next, Embodiment 5 of the present disclosure is described.

A cross sectional shape of a slot 52 is different from the cross sectional shape of the slot 12. This is only the difference between the configuration of an AC motor 1 according to Embodiment 5 and the above-mentioned configuration of the AC motor 1 according to Embodiment 1.

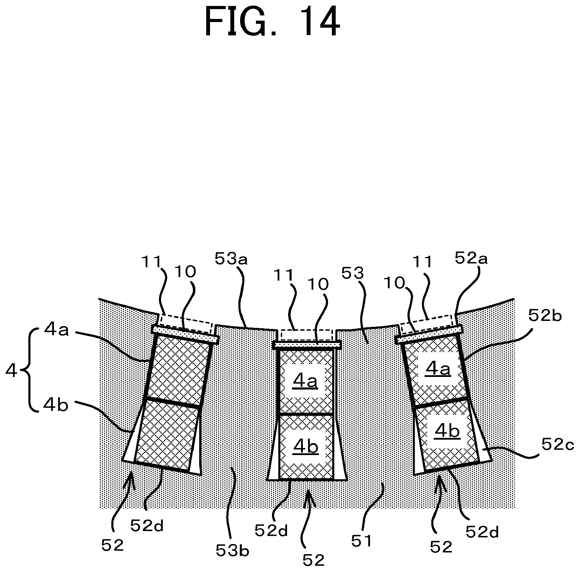

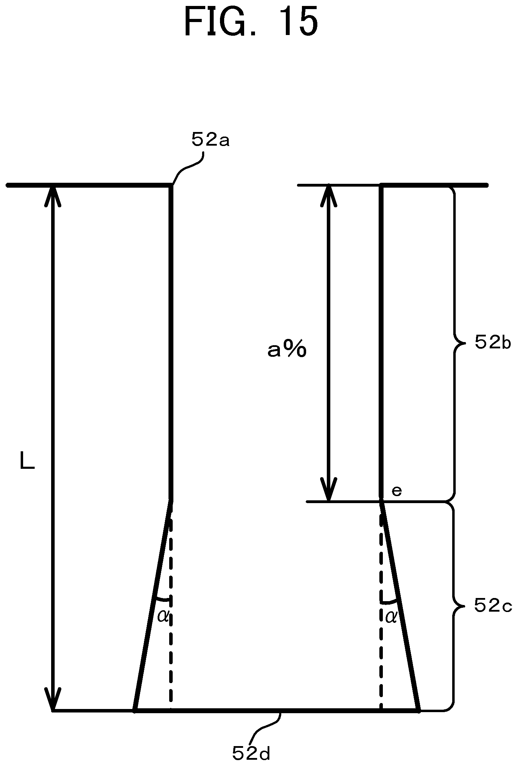

In Embodiment 5, as illustrated in FIG. 14 and FIG. 15, the groove width of a wide portion 52c that extends from the approximately 60% depth position e to a groove bottom portion 52d is increased from the depth position e towards the groove bottom portion 52d at the opening angle of α degree (10 degrees) on both sides respectively. The entire shape of the slot 52 is a hexagonal shape. Effects equivalent to those of Embodiment 1 mentioned above can be expected even if the cross sectional shape of the slot 52 is in such a shape.

### Embodiment 6

Next, Embodiment 6 of the present disclosure is described.

A configuration of an AC motor 1 according to Embodiment 6 is different from the configuration of the AC motor 1 according to Embodiment 5 mentioned above only in a shape of a slot 62.

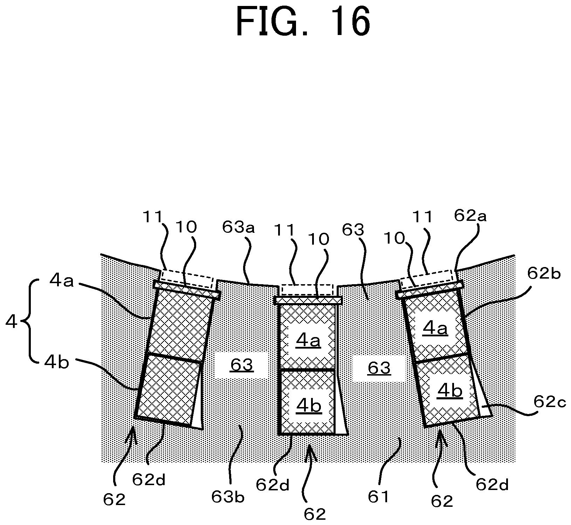

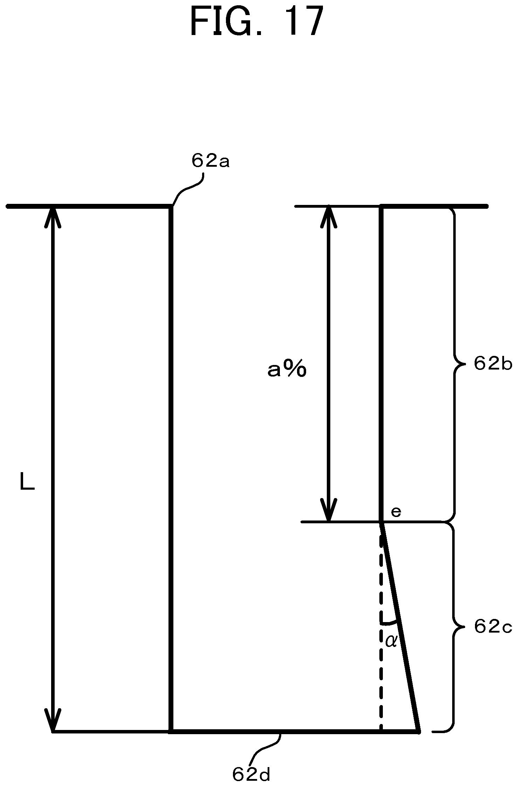

In Embodiment 6, as illustrated in FIG. 16 and FIG. 17, a groove width of a wide portion 62c that extends from the approximately 60% depth position e to a groove bottom portion 62d is increased from the depth position e towards the groove bottom portion 62d at the opening angle of α degree (10 degrees) on one side. The overall shape of the groove is pentagonal. In this way, directions of inserting the stator coils 4 into the slots 62 are limited to one direction. However, effects equivalent to those of Embodiment 5 mentioned above can be expected.

Furthermore, the groove width of the slot 62 is increased only on one side. As aforementioned, while a tooth width of a dedendum portion 63b of a stator core tooth 63 can be kept larger than a tooth top portion 63a, an opening angle that increases the width of the slot 62 can be increased to 20 degrees. In the final stage of the insertion of the stator coils 4, the lifting work of the inserted upper coil portion 4a can be performed more easily.

Cross sectional shapes of the slots are not limited to the above-mentioned embodiments. A depth of a widening start position e on an entry side of a wide portion can be determined at will, and opening angles α and β of wide portions can also be set at will, and in addition, groove bottom side shapes of groove width wide portions can also be set at will.

As described in detail, according to each of the above-mentioned embodiments, a space is provided in which the lower coil 4b can be rotated on the interior side of the slot, when the upper coil 4a is lifted from another slot 12 and the like. With this space, the other coil side can be lifted up from another slot without problems. As the result, coils can be easily assembled thereby reducing the possibility of damaging the insulation film on the coil surface.

The first angle is determined so that the width of the dedendum portion of the stator core tooth is not smaller than the width of the tooth top portion, and the power factor of the AC motor 1 can be approximately equally maintained in a case in which a space is not provided on the interior side of the slot.

In each of the slots 22, 42, and 62, the space mentioned above is disposed on one side in the slot width direction, and the direction of the insertion of the stator coils 4 is limited to one direction. However, the first angle of the space on the interior side of the slot can be increased. In the explanation of the embodiments, it is indicated that the first angle can be increased to 20 degrees. The width of the dedendum portion of the stator core teeth may be set wider than the width of the tooth top portion, and the first angle is not limited to 20 degrees.

### Industrial Availability

The present disclosure is suitable for adopting as a structure of a stator of an AC motor of a double-layer winding system. The AC motor may be an induction motor or a synchronous motor.

### Reference Signs List

- 1: AC motor
- 2: Stator
- 3: Stator iron core
- 4: Stator coil
- 4a: Upper coil
- 4b: Lower coil
- 5: Rotor
- 6: Rotor core
- 7: Rotor conductor
- 8: Rotor shaft
- 9: Frame
- 10: Wedge
- 11: Recess
- 12: Slot
- 12a: Entry portion
- 12b: Parallel groove portion
- 12c: Wide portion
- 12d: Groove bottom portion
- 13: Stator core teeth
- 13a: Tooth top portion
- 13b: Dedendum portion
- 21: Stator iron core
- 22: Slot
- 22a: Entry portion
- 22b: Parallel groove portion
- 22c: Wide portion
- 22d: Groove bottom portion
- 23: Stator core teeth
- 23a: Tooth top portion
- 23b: Dedendum portion
- 31: Stator iron core
- 32: Slot
- 32a: Entry portion
- 32b: Parallel groove portion
- 32c: Wide portion
- 32d: Groove bottom portion
- 33: Stator core teeth
- 33a: Tooth top portion
- 33b: Dedendum portion
- 41: Stator iron core
- 42: Slot
- 42a: Entry portion
- 42b: Parallel groove portion
- 42c: Wide portion
- 42d: Groove bottom portion
- 43: Stator core teeth
- 43a: Tooth top portion
- 43b: Dedendum portion
- 51: Stator iron core
- 52: Slot
- 52a: Entry portion
- 52b: Parallel groove portion
- 52c: Wide portion
- 52d: Groove bottom portion
- 53: Stator core teeth
- 53a: Tooth top portion
- 53b: Dedendum portion
- 61: Stator iron core
- 62: Slot
- 62a: Entry portion
- 62b: Parallel groove portion
- 62c: Wide portion
- 62d: Groove bottom portion
- 63: Stator core teeth
- 63a: Tooth top portion
- 63b: Dedendum portion
- 71: Stator iron core
- 72: Slot
- 73: Stator core teeth
- 73a: Tooth top portion
- 73b: Dedendum portion
- AX: Rotation axis
- B: Insertion direction of lower coil
- C: lifting direction of upper coil

## Claims

1. An AC motor comprising:
a stator iron core (3) in which a plurality of slots (12) are disposed; and
a plurality of stator coils (4) inserted in each of the slots (12) in a double-layer winding system in such a manner that the plurality of stator coils (4) are formed in a rectangular cross sectional shape in which one coil side is inserted on an interior side of one of the plurality of slots (12) and the other coil side is inserted on an entry side of another slot (12) of the plurality of slots (12),
**characterized in that** each of the slots (12) is provided with a space that enables the one coil side to be rotated on the interior side of the slot (12) when the other coil side is lifted up from the other slot (12);
wherein, in each of the slots (12), a width of the slot (12) is uniform up to a predetermined depth position, and the space is formed by gradually increasing the width of the slot (12) towards a groove bottom portion (12d) from the predetermined depth position.

2. The AC motor according to claim 1, **characterized in that**
in each of the slots (12), the width of the slot (12) is increased at a first angle towards the groove bottom portion (12d) from the predetermined depth position.

3. The AC motor according to claim 1 or 2, **characterized in that**
the predetermined depth position is determined such that the upper portion of the one coil side is positioned in a portion in which the width of the slot (12) is uniform, and the one coil side is rotatable due to the space.

4. The AC motor according to any one of claims 1 to 3, **characterized in that**
in the space, the width of the slot (12) from the predetermined depth position to the groove bottom portion (12d) is determined such that, when the one coil side is rotated on the interior side of each of the slots (12), the other coil side can be receded to the outside from the other slot (12).

5. The AC motor according to claim 4, **characterized in that**
the space is determined so as to secure a width of dedendum portions (13b) of stator core teeth (13) between each of the slots (12) that are wider than a width of tooth top portions (13a).

6. The AC motor according to any one of claims 1 to 5, **characterized in that**
in each of the slots (12), the space is formed by increasing the width of the slot (12) towards the entry side from the groove bottom portion (12d).

7. The AC motor according to claim 6, **characterized in that**
in each of the slots (12) the width of the slot (12) is increased at a second angle towards the entry side from the groove bottom portion (12d).

8. The AC motor according to claim 6, **characterized in that**
in each of the slots (12), a concave surface is formed towards the entry side from the groove bottom portion (12d).

9. The AC motor according to any one of claims 1 to 8, **characterized in that**
in each of the slots (12), the space is disposed on both sides in the slot (12) width direction.

10. The AC motor according to any one of claims 1 to 8, **characterized in that**
in each of the slots (12), the space is disposed on one side in the slot (12) width direction.

## Patentansprüche

1. AC-Motor, mit:
einem Statoreisenkern (3), in dem eine Mehrzahl von Schlitzen (12) angeordnet ist; und
einer Mehrzahl von Statorspulen (4), die in jeden der Schlitze (12) in einem Doppellagenwicklungssystem auf solch eine Weise angeordnet sind, dass die Mehrzahl von Statorspulen (4) in einer rechteckigen Querschnittsform ausgebildet sind, in der eine Spulenseite auf einer Innenseite von einem der Mehrzahl von Schlitzen (12) und die andere Spulenseite auf einer Eintrittsseite von einem anderen Schlitz (12) der Mehrzahl von Schlitzen (12) eingefügt ist,
**dadurch gekennzeichnet, dass** jeder der Schlitze (12) mit einem Zwischenraum bereitgestellt ist, der ermöglicht, dass die eine Spulenseite auf der Innenseite des Schlitzes (12) rotiert werden kann, wenn die andere Spulenseite von dem anderen Schlitz (12) hervorgehoben wird;
wobei, in jedem der Schlitze (12), eine Breite des Schlitzes (12) gleichmäßig bis zu einer vorbestimmten Tiefenposition ist, und der Zwischenraum ausgebildet ist durch graduelles Ansteigen der Breite des Schlitzes (12) von der vorbestimmten Tiefenposition aus in Richtung eines Nutbodenabschnitts (12d).

2. AC-Motor nach Anspruch 1, **dadurch gekennzeichnet, dass**
in jedem der Schlitze (12) die Breite des Schlitzes (12) von der vorbestimmten Tiefenposition aus in einem ersten Winkel in Richtung des Nutbodenabschnitts (12d) vergrößert ist.

3. AC-Motor nach Anspruch 1 oder 2, **dadurch gekennzeichnet, dass**
die vorbestimmte Tiefenposition bestimmt ist, so dass der obere Abschnitt der einen Spulenseite in einem Abschnitt positioniert ist, in dem die Breite des Schlitzes (12) gleichmäßig ist, und die eine Seite rotierbar aufgrund des Zwischenraums ist.

4. AC-Motor nach einem der Ansprüche 1 bis 3, **dadurch gekennzeichnet, dass**
in dem Zwischenraum die Breite des Schlitzes (12) von der vorbestimmten Tiefenposition aus zu dem Nutbodenabschnitt (12d) derart bestimmt ist, dass, wenn die eine Spulenseite auf der Innenseite von jedem der Schlitze (12) rotiert ist, die andere Spulenseite zu der Außenseite von dem anderen Schlitz (12) zurückgezogen werden kann.

5. AC-Motor nach Anspruch 4, **dadurch gekennzeichnet, dass**
der Zwischenraum derart bestimmt ist, dass eine Breite von Zahnfußabschnitten (13b) der Statorkernzähne (13) zwischen jedem der Schlitze (12) gesichert ist, die breiter als eine Breite von Zahnkopfabschnitten (13a) sind.

6. AC-Motor nach einem der Ansprüche 1 bis 5, **dadurch gekennzeichnet, dass**
in jedem der Schlitze (12) der Zwischenraum durch Vergrößern der Breite des Schlitzes (12) in Richtung der Eingangsseite von dem Nutbodenabschnitt (12d) aus ausgebildet ist.

7. AC-Motor nach Anspruch 6, **dadurch gekennzeichnet, dass**
in jedem der Schlitze (12) die Breite des Schlitzes (12) unter einem zweiten Winkel in Richtung der Eingangsseite von dem Nutbodenabschnitt (12d) aus vergrößert ist.

8. AC-Motor nach Anspruch 6, **dadurch gekennzeichnet, dass**
in jedem der Schlitze (12) eine konkave Fläche in Richtung der Eingangsseite von dem Nutbodenabschnitt (12d) aus ausgebildet ist.

9. AC-Motor nach einem der Ansprüche 1 bis 8, **dadurch gekennzeichnet, dass**
in jedem der Schlitze (12) der Zwischenraum an beiden Seiten in der Schlitz(12)-Breitenrichtung angeordnet ist.

10. AC-Motor nach einem der Ansprüche 1 bis 8, **dadurch gekennzeichnet, dass**
in jedem der Schlitze (12) der Zwischenraum an einer Seite in der Schlitz(12)-Breitenrichtung angeordnet ist.

## Revendications

1. Moteur à courant alternatif comportant :
un noyau (3) en fer de stator dans lequel est disposée une pluralité de rainures (12) ; et
une pluralité de bobines (4) de stator insérées dans chacune des rainures (12) dans un système d'enroulement à double couche de telle manière que la pluralité de bobines (4) de stator soit formée sous une forme en section droite rectangulaire dans laquelle un côté de bobine est inséré d'un côté intérieur d'une rainure de la pluralité de rainures (12) et l'autre côté de bobine est inséré d'un côté d'entrée d'une autre rainure (12) de la pluralité de rainures (12),
**caractérisé en ce que**
chacune des rainures (12) est munie d'un espace qui permet au côté de bobine considéré d'être tourné du côté intérieur de la rainure (12) lorsque l'autre côté de bobine est soulevé de l'autre rainure (12) ;
dans chacune des rainures (12), une largeur de la rainure (12) étant uniforme jusqu'à une position de profondeur prédéterminée, et l'espace étant formé en augmentant progressivement la largeur de la rainure (12) en direction d'une partie (12d) de fond de rainure en partant de la position de profondeur prédéterminée.

2. Moteur à courant alternatif selon la revendication 1, **caractérisé en ce que**
dans chacune des rainures (12), la largeur de la rainure (12) est augmentée suivant un premier angle en direction de la partie (12d) de fond de rainure en partant de la position de profondeur prédéterminée.

3. Moteur à courant alternatif selon la revendication 1 ou 2, **caractérisé en ce que**
la position de profondeur prédéterminée est déterminée de telle façon que la partie supérieure du côté de bobine considéré soit positionnée dans une partie où la largeur de la rainure (12) est uniforme, et **en ce que** le côté de bobine considéré peut être tourné en raison de l'espace.

4. Moteur à courant alternatif selon l'une quelconque des revendications 1 à 3, **caractérisé en ce que**
dans l'espace, la largeur de la rainure (12) de la position de profondeur prédéterminée à la partie (12d) de fond de rainure est déterminée de telle façon que, lorsque le côté de bobine considéré est tourné du côté intérieur de chacune des rainures (12), l'autre côté de bobine peut être placé en retrait vers l'extérieur par rapport à l'autre rainure (12).

5. Moteur à courant alternatif selon la revendication 4, **caractérisé en ce que**
l'espace est déterminé de façon à assurer une largeur de parties (13b) de pied de dents (13) de noyau de stator entre chacune des rainures (12) qui est plus large qu'une largeur de parties (13a) de sommet des dents.

6. Moteur à courant alternatif selon l'une quelconque des revendications 1 à 5,
**caractérisé en ce que** dans chacune des rainures (12), l'espace est formé en augmentant la largeur de la rainure (12) en direction du côté d'entrée en partant de la partie (12d) de fond de rainure.

7. Moteur à courant alternatif selon la revendication 6, **caractérisé en ce que**
dans chacune des rainures (12) la largeur de la rainure (12) est augmentée suivant un second angle en direction du côté d'entrée en partant de la partie (12d) de fond de rainure.

8. Moteur à courant alternatif selon la revendication 6, **caractérisé en ce que**
dans chacune des rainures (12), une surface concave est formée en direction du côté d'entrée en partant de la partie (12d) de fond de rainure.

9. Moteur à courant alternatif selon l'une quelconque des revendications 1 à 8, **caractérisé en ce que**
dans chacune des rainures (12), l'espace est disposé des deux côtés dans le sens de la largeur de la rainure (12).

10. Moteur à courant alternatif selon l'une quelconque des revendications 1 à 8, **caractérisé en ce que**
dans chacune des rainures (12), l'espace est disposé d'un seul côté dans le sens de la largeur de la rainure (12).
